# EUROPEAN PATENT APPLICATION

(11) **EP 2 679 326 A1**
(43) Date of publication of application: **01.01.2014**
(21) Application number: 13174227.2
(22) Date of filing: 28.06.2013
(51) Int. Cl.: B23D 59/00, B23Q 17/24

(54) **System for enhancing operation of power tools**

(30) Priority: 29.06.2012 US 201261666115 P; 21.06.2013 US 201313923710
(71) Applicant: Black & Decker Inc., Newark, Delaware 19711 (US)
(72) Inventor: Busschaert, Jason, Bel Air, MD Maryland 21014 (US); Schell, Craig Alan, Street, MD Maryland 21154 (US)
(74) Representative: Bell, Ian Stephen

(57) **Abstract**

A system for facilitating power tool (1000) operation includes a camera (100) , a computing device (250) receiving information from the camera, a display (300) for displaying information received from the computing device, and a reference marker (150) having at least two markers (151) viewable by the camera. The reference marker is disposed on a power tool or separate from the power tool. The computing device calculates a position of the reference marker from the information received from the camera. The display can display video information showing the power tool and graphical information showing a desired position for the power tool and/or a direction of movement for moving the power tool towards the desired position for the power tool.

## Description

The present invention relates to a system for enhancing the operation of power tools.

It is desirable to efficiently operate power tools in a jobsite, which increases productivity and lowers labor costs. Accordingly, it is an object of the invention to provide a system to increase the efficiency of power tools as used in construction situations.
Fig. 1 illustrates an exemplary system according to the invention.
Fig. 2 is a block diagram of the major electronic components of the exemplary system of Fig. 1.
Fig. 3 is a flowchart of different exemplary processes that can be performed by the exemplary system of Fig. 1.
Fig. 4 illustrates a visual output of the exemplary system of Fig. 1.
Fig. 5 illustrates different reference markers that can be used with the exemplary system of Fig. 1, where Figs. 5A-5C are a right triangle marker, a circular marker and a pipe marker, respectively.
Fig. 6 shows a circular saw which can be part of the system, where Figs. 6A-6B are a side view seen from the perspective of line A-A in Fig. 6B and a bottom view seen from the perspective of line B-B in Fig. 6A, respectively.

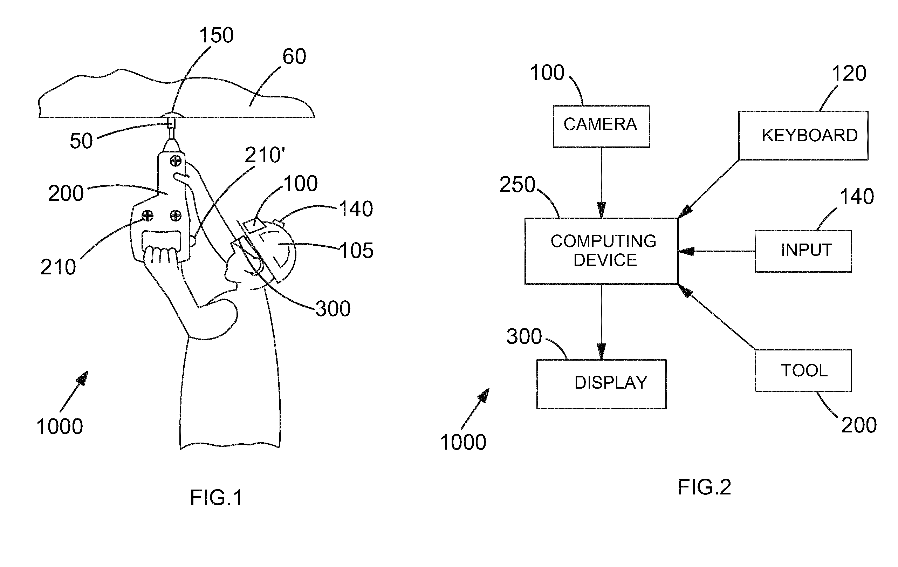

FIGS. 1-2 illustrate an exemplary system 1000 for enhancing operation of power tools according to the invention. In particular, power tools 200 may be a drill, circular saws, reciprocating saws, jigsaws, miter saws, table saws, etc.

System 1000 may also include a computing device 250, such as a personal computer, tablet, mobile telephone, smartphone, etc. It is desirable that power tools 200 be in communication with computing device 250. Preferably such communication will occur via a wireless communication system 126, such as Wi-Fi, Bluetooth, Zigbee, infrared light, RF, etc.

Computing device 250 may include a camera 100. Persons skilled in the art will recognize that camera 100 may also be separate from computing device 250. For example, camera 100 may be disposed on a tripod or a user's hard hat 105. If camera 100 is separate from computing device 250, it is preferable that communication between camera 100 and computing device 250 occur via a wireless communication system, such as Wi-Fi, Bluetooth, Zigbee, infrared light, RF, etc. Depending on the bandwidth of the wireless communication system, it may be desirable to provide camera 100 with graphic processing circuitry so as to calculate orientation vectors, simplify visual data, etc., thus minimizing the amount of data sent through the wireless communication system.

Computing device 250 may include a keyboard 120. Such keyboard 120 can be a physical keyboard on computing device 250, or a virtual keyboard shown on a display 300 of computing device 250. Persons skilled in the art will recognize that keyboard 120 may also be separate from computing device 250. If keyboard 120 is separate from computing device 250, it is preferable that communication between keyboard 120 and computing device 250 occur via a wireless communication system, such as Wi-Fi, Bluetooth, Zigbee, infrared light, RF, etc.

Persons skilled in the art will recognize that computing device 250 may receive other inputs from assorted input systems 140, such as measurements sent from a wall sensor, laser distance measurer, tape measure, etc., data received by an RFID sensor and/or QR/bar code scanners, etc. Such input systems 140 may also be separate from computing device 250. For example, an RFID sensor 140 may be disposed on a user's hard hat 105. If an input system 140 is separate from computing device 250, it is preferable that communication between input system 140 and computing device 250 occur via a wireless communication system, such as Wi-Fi, Bluetooth, Zigbee, infrared light, RF, etc.

Computing device 250 may have a display 300. Preferably such display 300 is an LED or OLED display. Display 300 (with or without computing device 250) could also be wearable by the user. For example, display 300 may be disposed on glasses worn by a user. Persons skilled in the art are referred to US Patent No. 8,203,502, which is wholly incorporated by reference, for further information on such display glasses (also known as head-up display).

Persons skilled in the art will recognize that display 300 may also be separate from computing device 250. If display 300 is separate from computing device 250, it is preferable that communication between display 300 and computing device 250 occur via a wireless communication system, such as Wi-Fi, Bluetooth, Zigbee, infrared light, RF, etc.

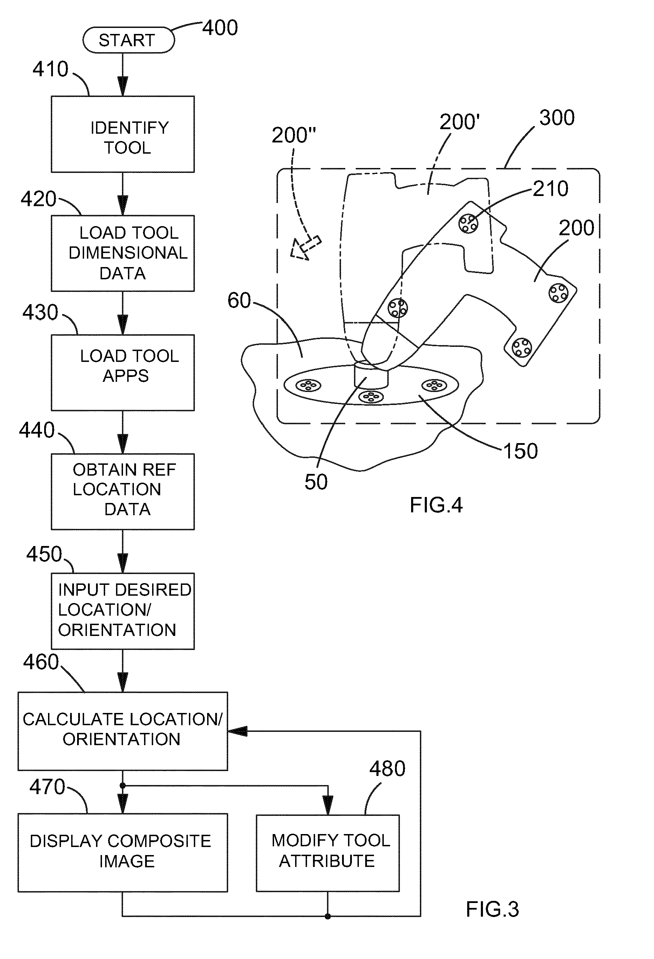

Computing device 250 may have a program or app that implements the steps shown in the flowchart of FIG. 3. A user may begin the program at step 400 by, for example, selecting the appropriate app/program on her computing device 250.

In response to such selection, computing device 250 preferably identifies at least one nearby power tool 200 (step 410). One method for identified such power tools is by pinging the different nearby power tools 200 and other products with a wireless signal, such as RFID or Bluetooth. The computing device 250 can then create an inventory of nearby power tools 200 and other products based on the responses it receives.

Alternatively, computing device 250 can get video input from the camera 100. Computing device 250 can look for QR/bar code markers 210 disposed on the power tools 200 to identify the nearby power tools 200. Persons skilled in the art will recognize that markers 210 could be QR codes, bar codes, IR markers, or other markers, such as the circular codes taught in US Patent No 5,554,841, wholly incorporated hereby by reference.

If multiple power tools 200 or other products are identified, the user can select one of the listed power tools 200 for further use. Once the desired power tool 200 is identified and/or selected, the computing device 250 loads the dimensional data of power tool 200 into memory (step 420). Such dimensional data may include the location of different markers 210 or other topographical feature on the housing of the power tool 200, such as a bump 210'.

The computing device 250 can also load tool-specific apps (step 430). For example, if power tool 200 is a drill, impact driver or hammer, computing device 250 can load apps to input the desired drill orientation (e.g., being perpendicular to a wall surface) or depth, to input or indicate certain locations where holes should be drilled, to modify tool attributes depending upon the material to be drilled into, etc. If power tool 200 is a circular saw, computing device 250 can load apps to steer the circular saw along a particular path, to allow a limited cutting distance, to cut along a path disposed at a particular angle relative to a defined line, etc. The user can then select the desired app for the particular job task at hand.

If necessary for the particular app selected by the user, computing device 250 can obtain reference location data (step 440). This can be accomplished in multiple ways. First, computing device 250 can be provided with an electronic file representative of the construction plans, which indicate the location of different tasks, such as different areas to cut or drill, different places where anchors 50 need to be installed, etc. This data can be loaded electronically via a file transfer from another device, inputted by hand via keyboard 120, or by loading actual measurements taken by tape measures, distance measurers, angle measurers and other inputs 140.

Alternatively, a user may place reference markers 150 on different work surfaces. These reference markers 150 may be shaped for particular surfaces or job tasks.

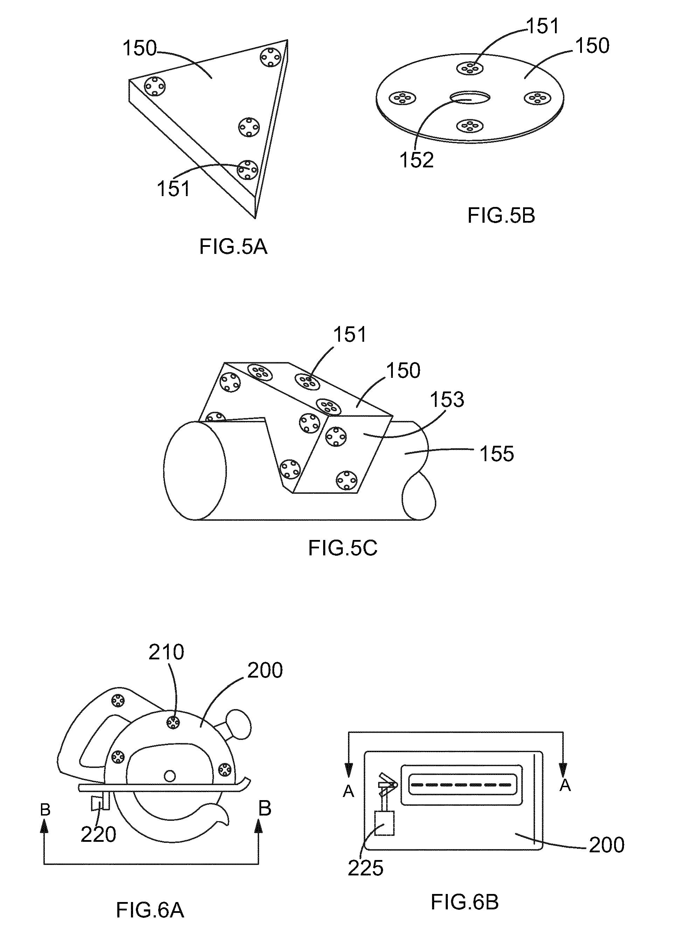

For example, if the user wants to refer to a particular edge or line, the user can place the reference marker 150 shown in FIG. 5A. If the user wants to identify a point on a surface, e.g., a point where an anchor is to be installed, the user can place a circular reference marker 150 as shown in FIG. 5B. Such circular reference marker 150 may have a center opening 152 to allow the user to drill near the center of circular reference marker 150.

Another example of a task-specific reference marker 150 is shown in FIG. 5C. Such reference marker 150 has a body 153 which can be disposed on a pipe 155.

Computing device 250 can look for QR/bar code markers 151 disposed on the reference markers 150 to identify the reference marker 150. Persons skilled in the art will recognize that markers 151 could be QR codes, bar codes, IR markers, or other markers, such as the circular codes taught in US Patent No 5,554,841, wholly incorporated hereby by reference.

Once computing device 250 recognizes the reference marker 150, it loads up the dimensional data for the particular reference marker 150. Because computing device 250 knows the distances between markers 151, it can obtain images via camera 100 that show the markers 151, and compare the relative distances in the image to the actual known distances to calculate the orientation of the reference marker 150. Persons skilled in the art are referred to US Patent No. 8,179,604, wholly incorporated herein by reference, which illustrates the triangulation principles used in determining position and orientation of the reference markers 150 based on the captured visual data.

Persons skilled in the art will recognize that it is preferable that reference markers 150 have multiple markers 151, so that, even if some markers 151 are covered, there will be enough uncovered markers 151 for the computing device 250 to calculate the orientation of reference marker 150. If system 1000 uses only one camera 100, there should be enough markers 151 so that at least three markers 151 remain uncovered. If system 1000 uses more cameras 100, the number of markers 151 required to remain uncovered decreases. For example, US Patent No. 8,179,604 illustrates that only one marker 151 would be necessary in a two-camera system.

Once the orientation of the reference marker 150 is determined, computing device can create a coordinate system based on reference marker 150. In other words, once computing device 250 calculates the orientation of the circular reference marker 150 shown in FIG. 5B, it can create a coordinate system as computing device 250 knows where the center of such reference marker 150 is located.

If necessary, the user can input the desired location and/or orientation of power tool 200 relative to reference marker 150 (step 450). This can be done by inputting values into computing device 250 via a keyboard 120 or other input systems.

Because computing device 250 knows the dimensional data of power tool 200 (from step 420), the computing device 250 knows the location of different markers 210 or other topographical features on the housing of the power tool 200, such as a bump 210'. Computing device 250 can obtain images via camera 100 that show the markers 210/210', and compare the relative distances in the image to the actual known distances to calculate the location and/or orientation of the power tool 200 (step 460). Persons skilled in the art will recognize that the triangulation techniques used to calculate the orientation and/or location of reference markers 150 can be used to calculate the location and/or orientation of the power tool 200.

Persons skilled in the art will recognize that it is preferable that power tool 200 have multiple markers 210, so that, even if some markers 210 are covered, there will be enough uncovered markers 210 for the computing device 250 to calculate the orientation of power tool 200. If system 1000 uses only one camera 100, there should be enough markers 210 so that at least three markers 210 remain uncovered. If system 1000 uses more cameras 100, the number of markers 210 required to remain uncovered decreases.

Depending upon the selected tool app, computing device 250 can show a composite image on display 300 as shown in FIG. 3 (step 470). In such image, the user will see the actual orientation of the power tool 200 and reference marker 150. Persons skilled in the art will recognize that it may be advantageous to replace the actual video data with a simplified version where a graphic representative of power tool 200 in its actual orientation (without showing the user's hands).

In addition, it may be advantageous to show a pale or ghost image 200' of power tool 200 at the desired location/orientation in the composite image. In this manner, for example, the user can know to move the power tool 200 to match the orientation of the ghost image 200' in order to ensure perpendicularity relative to surface 60. Once the orientation of the power tool 200 matches the orientation of the ghost image 200', computing device 250 can provide an audio or visual signal to indicate that a match has been reached.

Similarly, display 300 can show other indications such as arrow 200" to instruct the user to move the power tool 200 in a certain direction, or other visual cues, such as stop signs, etc. to communicate instructions to the user. For example, if the power tool 200 is a circular saw that is supposed to move along a desired line, arrows 200" can be used to instruct the user to steer the circular saw to the left or right in order to make a straight cut. If the user had inputted a cut with a particular length, display 300 can show a stop sign to instruct the user to end the cut.

Depending upon the selected tool app, computing device 250 may modify a tool attribute (step 480). Persons skilled in the art are referred to US Application No. 61/664,428, filed on June 26, 2012, entitled "System for Enhancing Power Tools," which is wholly incorporated by reference, for further details on how computing device 250 modifies different tool attributes.

For example, referring to FIG. 6, if the user had inputted a particular cut with a circular saw, computing device 250 can control a rudder 220 to steer the circular saw to the left or right in order to make a straight cut. Rudder 220 can be moved by a servo 225, which is preferably controlled in real-time by computing device 250.

The description of the invention is merely exemplary in nature and, thus, variations that do not depart from the gist of the invention are intended to be within the scope of the invention. Such variations are not to be regarded as a departure from the scope of the invention.

## Claims

1. A system for facilitating power tool operation, comprising:
a first camera;
a computing device receiving information from the first camera;
a display for displaying information received from the computing device; and
a reference marker having at least two markers viewable by the first camera, the reference marker being disposed on a power tool or separate from the power tool;
wherein the computing device calculates a position of the reference marker from the information received from the first camera.

2. The system of Claim 1, wherein the computing device calculates a position or orientation of the power tool when the reference marker is disposed on the power tool.

3. The system of Claim 1, wherein the display displays at least one of video information showing the power tool and graphical information showing a desired position for the power tool or a direction of movement for moving the power tool towards the desired position for the power tool.

4. The system of Claim 1, wherein the at least markers comprise at least one of the group consisting of QR codes, bar codes, IR codes, topographical features on the power tool, and colored features on the power tool.

5. The system of Claim 1, wherein the display is a head-up display.

6. The system of Claim 1, wherein at least two of the first camera, the computing device and the display are connected wirelessly.

7. The system of Claim 1, further comprising a second camera providing information to the computing device.

8. The system of Claim 1, wherein the power tool has a feature for adjusting a cutting direction of the power tool, wherein the feature is controllable by the computing device.

9. The system of Claim 1, wherein the reference marker has first and second facets, each facet having a different number of markers thereon.
